# EUROPEAN PATENT SPECIFICATION

(11) **EP 2 921 568 B1**
(45) Date of publication and mention of the grant of the patent: **11.04.2018**
(21) Application number: 13854271.7
(22) Date of filing: 21.02.2013
(51) Int. Cl.: C22C 38/00, C21D 9/46, C22C 38/60, C21D 6/00, B21B 1/22, C21D 8/02, C21D 8/12, C21D 1/26, C22C 38/02, C22C 38/04, C22C 38/06

(54) **HIGH-FORMABILITY AND SUPER-STRENGTH COLD-ROLLED STEEL SHEET AND MANUFACTURING METHOD THEREOF**
HOCHVERFORMBARES UND SUPERFESTES KALTGEWALZTES STAHLBLECH UND HERSTELLUNGSVERFAHREN DAFÜR
TÔLE D'ACIER LAMINÉE À FROID SUPER RÉSISTANTE ET PRÉSENTANT UNE APTITUDE ÉLEVÉE À LA DÉFORMATION AINSI QUE PROCÉDÉ DE FABRICATION DE CETTE DERNIÈRE

(30) Priority: 15.11.2012 CN 201210461631
(43) Date of publication of application: 23.09.2015
(73) Proprietor: Baoshan Iron & Steel Co., Ltd., Shanghai 201900 (CN)
(72) Inventor: ZHONG, Yong, Shanghai 201900 (CN); WANG, Li, Shanghai 201900 (CN); FENG, Weijun, Shanghai 201900 (CN); XIONG, Wei, Shanghai 201900 (CN); ZHI, Jianjun, Shanghai 201900 (CN); HU, Guangkui, Shanghai 201900 (CN)
(74) Representative: Grünecker Patent- und Rechtsanwälte PartG mbB
(86) International application number: PCT/CN2013/071711
(87) International publication number: WO 2014/075404

(56) References cited:
- WO-A1-2011/111332
- WO-A1-2012/020511
- CN-A- 1 343 262
- CN-A- 101 939 456
- CN-A- 102 471 849
- JP-A- H 073 332
- JP-A- H05 179 345

## Description

### Technical Field

The present invention relates to a cold-rolled steel plate, particularly to a high-formability, super-high-strength cold-rolled steel plate and a method for manufacturing the same, wherein the super-high-strength cold-rolled steel plate has a yield strength of 600-900MPa, a tensile strength of 980-1150MPa and an elongation of 17-25%, and has good plasticity and low resilience.

### Background Art

It is estimated that when the weight of a vehicle is decreased by 10%, its fuel consumption will be lowered by 5%-8%, and the emission of greenhouse gas CO₂ and such pollutants as NOₓ, SO₂, etc., will be reduced as well. Self-owned brand passenger vehicles of our country are approximately 10% heavier than their foreign counterparts, and the difference in weight is even larger for commercial vehicles. Automobile steel plate, which is the main raw material of an automobile body, accounts for about 60-70% of the weight of the automobile body. Mass use of high-strength and super-high-strength steel plate with strength at the level of 590∼1500MPa instead of traditional automobile steel is an optimal solution to the problem of material in order to achieve "reduced weight, less energy consumption, higher safety and lower manufacturing cost" for automobiles, and it is also of great significance for the building of low-carbon society. Hence, it has been a trend in recent years for the development of steel plate to enhance the strength of the steel plate so that the thickness of the steel plate can be reduced. Development and application of advanced high-strength automobile steel mainly strengthened by phase change has been one of the mainstream subjects under research in various large steel companies in the world.

The high strength of traditional super-high-strength steel is originated from the high-strength phase structure of martensite, bainite, etc., but the plasticity and the formability are reduced significantly at the same time. Introduction of a certain amount of residual austenite into the structure of martensite or bainite is an effective technical approach to obtain materials with high-strength and high-plasticity. For example, TRIP steel is composed of ferrite, bainite and residual austenite, and has relatively high strength and plasticity, but this phase structure restricts the further improvement of its strength. Thus, replacement of bainite by martensite as the main strengthening phase has begun to gain attention.

Chinese Patent CN 10240923 5A discloses a high-strength cold-rolled transformation-induced plasticity steel plate and preparation method thereof, wherein the composition is: C: 0.1%-0.5%, Si: 0.1%-0.6%, Mn: 0.5%-2.5%, P: 0.02%-0.12%, S ≤0.02%, Al: 0.02%-0.5%, N≤0.01%, Ni: 0.4%-0.6%, Cu: 0.1%-1.0%, and the balance of Fe. The preparation method comprises the following steps: (a) smelting molten steel meeting the composition condition, and casting into a blank; (b) rolling, wherein the heating temperature is 1100-1250°C, the heat preservation time is 1-4h, the initial rolling temperature is 1100°C, the end rolling temperature is 750-900°C, the coiling temperature is lower than 700°C, the thickness of a hot-rolled steel plate is 2-4mm, and the cold-rolling accumulated reduction amount is 40-80%; and (c) continuous annealing, wherein the annealing temperature is 700-Ac3+50°C, the heat preservation time is 30-360s, the cooling speed is 10-150°C/s, the aging temperature is 250-600°C, the aging time is 30-1200s, and the steel plate is cooled to room temperature at a speed of 5-100°C/s. The steel plate of the invention has a yield strength of 380-1000 MPa, a tensile strength of 680-1280 MPa and an elongation of 15-30%. An elongation of about 20% can be realized by the invention on a tensile strength level of 1000MPa, and the steel plate has relatively good comprehensive properties. However, a relatively large amount of alloy elements such as Cu, Ni and the like are added into the steel of the invention, which increases the material cost to a large extent, and notably restricts its application in the automobile field which has extremely critical demand on cost.

Japanese Patent JP 2005-232493 discloses the composition of a steel plate having high strength and high formability as well as a process. The composition comprises C: 0.02-0.25%, Si: 0.02-4.0%, Mn: 0.15-3.5%, and the balance of Fe. The structure of the material comprises double phases of ferrite and martensite, wherein the ferrite content accounts for 30-60%. The content of residual austenite is less than 1.0%. The coiling temperature of the hot-rolled plate is 500°C, and the plate is heated to 900-950°C after cold rolling, followed by slow cooling to 640°C, then quick cooling to 350°C, and finally slow cooling to room temperature. Steel plate having about 850MPa of yield strength, about 1000MPa of tensile strength and 14% of elongation can be obtained via the above process. The steel of this invention features simple composition and low cost, but the elongation on the order of 14% still can not satisfy the demand of automobile high-strength steel on formability.

Chinese Patent CN200510023375.0 discloses a low-carbon, low-silicon cold-rolled transformation plasticity steel and a manufacturing method thereof. The components and weight percentages of the low-carbon, low-silicon cold-rolled transformation plasticity steel of this invention are: C 0.1-0.2%, Si 0.1-0.5%, Mn 0.5-2.0%, Al 0.5-1.5%, V 0.05-0.5%, trace amount of S, P, N, and the balance of Fe. After treatment, the low-carbon, low-silicon cold-rolled transformation plasticity steel exhibits good strong plasticity, 650-670MPa of tensile strength and 32.5-34% of elongation. The steel of this invention has low tensile strength, and thus can not meet the demand of automobile super-high-strength steel on performance properties. Moreover, addition of a certain amount of Cr is required, rendering it unsuitable for use as automobile steel which has very critical demand on cost control.

WO2011/111332A1 discloses a method for preparing a high-strength steel sheet, and the technical breakthrough of this method resides in a controlled heat treatment within a temperature range from Ms to Ms-150°C, which will achieve uniform heat profile and mechanical properties within the steel sheet. Nevertheless, this reference does not disclose the elemental composition and crystal phase composition of the steel, nor does it disclose the particularly designed two-stage cooling procedure of the steel sheet preparation method of the present application.

JPH7-3332 discloses a method for preparing a cold rolled steel sheet, comprising a particularly designed continuous annealing step for a cold-rolled steel sheet. Nevertheless, the steel sheet of this reference has an elemental composition that is significantly different from that of the present application, and this reference is completely silent about the crystal phase of the steel sheet.

### Summary

The object of the invention is to provide a high-formability, super-high-strength cold-rolled steel plate and a method for manufacturing
the same, wherein the cold-rolled steel plate has a yield strength of 600-900MPa, a tensile strength of above 980MPa and an elongation of 17-25%, has good plasticity and low resilience, and is suitable for manufacturing structure parts and safety parts of vehicles.

In order to achieve the above object, the technical solution of the invention is as follows:
There are a number of existing methods for manufacturing high-strength steel. However, for the sake of ensuring the strength and formability of steel as required, a relatively large amount of alloy elements such as Cr, Nb, B and the like are added on the basis of existing components of carbon manganese steel according to most of these inventions, which not only adds to the production cost of steel products, but also degrades the manufacturability of the products, and increases the operation difficulty of smelting, continuous casting and other procedures. C, Si, Mn are the most cost-effective strengthening elements. It will be an extremely advantageous solution for the development of automobile high-strength steel to realize better comprehensive properties than those of existing automobile steel plate by comprehensive optimization design of composition- process- structure-properties.

The present invention employs a design starting from the composition of common carbon manganese steel, wherein the law of the influence of alloy elements such as Si, Mn, inter alia on the transformation behavior of the material is made full use of, and the final structure of the material is finely controlled by way of optimized quenching-partitioning technology, so as to achieve superior properties of integrated super high strength and high plasticity, and obtain super-high-strength steel plate products having excellent performance properties at low cost.

In particular, the high-formability, super-high-strength cold-rolled steel plate according to the present invention consists of the following components, based on weight percentages: C: 0.18-0.22%, Si: 1.4- 1.8%, Mn: 1.8-2.3%, P≤0.015%, S≤0.012%, Al: 0.03-0.06% N≤0.008%, and the balance of Fe and unavoidable impurities. The steel plate has a structure at room temperature of 10%-30% ferrite + 60-80% martensite + 5-15% residual austenite; a yield strength of 600-900MPa, a tensile strength of 980-1150MPa, and an elongation of 17-25%.

Preferably, in the composition of the steel plate, P≤0.012%, S≤0.008%, based on weight percentage.

In the design of the chemical composition of the steel according to the invention:
C: It is the most basic strengthening element in steel, also a stabilizing element for austenite. Relatively high content of C in austenite is advantageous for increasing the fraction of residual austenite and improving the properties of the material. However, excessive C may exasperate the weldability of the steel products. Thus, the C content needs to be controlled in a suitable range.
Si: It is an element which inhibits the formation of carbides. Due to its extremely poor solubility in carbides, it can effectively inhibit or retard the formation of carbides, which, in the process of partitioning, facilitates the formation of carbon rich austenite that is retained as residual austenite to room temperature. However, excessive Si will degrade the high temperature plasticity of the material, and increase the defect occurrence in the process of smelting, continuous casting and hot rolling. Thus, the Si content also needs to be controlled in a suitable range.
Mn: It is a stabilizing element for austenite. The presence of Mn can lower the transformation temperature of martensite Ms and thus increase the content of residual austenite. In addition, Mn is a strengthening element for solid solution and favors the improvement of the strength of steel plate. However, excessive Mn may lead to unduly high hardenability of steel plate and go against the fine control over the structure of the material.
P: It has a function similar to Si. It mainly acts to strengthen solid solution, inhibit formation of carbides, and enhance the stability of residual austenite. The addition of P may deteriorate weldability significantly, and increase the brittlement of the material. In the present invention, P, which is considered as an impurity element, is controlled at a minimized level.
S: As an impurity element, its content is controlled at a level as low as possible.
Al: It has a function similar to Si. It mainly acts to strengthen solid solution, inhibit formation of carbides, and enhance the stability of residual austenite. However, the strengthening effect of Al is weaker than that of Si.
N: It is not an element in need of special control. N is controlled at a minimized level during smelting so as to decrease its undesirable impact on the control over inclusions.

There is provided a method for manufacturing a high-formability, super-high-strength cold-rolled steel plate, comprising:
1) smelting, casting
   the above composition is smelted and cast into a plate blank;
2) the plate blank is heated to 1170-1230°C and held;
3) hot rolling
   the end rolling temperature is 880±30°C, and the coiling temperature is 550-650°C;
4) acid washing, cold rolling
   cold rolling reduction rate is 40-60%, and steel strip is formed;
5) annealing
   cold rolling reduction rate is 40-60%. The steel strip is annealed at 860-920°C, and slowly cooled to 690-750°C at a cooling speed of 3-10°C/s so that a certain proportion of ferrite is generated in the material. Then, it is rapidly cooled to 240-320°C at a cooling speed ≥50°C/s so that austenite is partially transformed into martensite. Then, it is reheated to 360-460°C, and held for 100-500s. Finally, it is cooled to room temperature;
   in the end, a super-high-strength cold-rolled steel plate having a yield strength of 600-900MPa, a tensile strength of 980-1150MPa, an elongation of 17-25%, superior formability and low resilience is obtained.

Preferably, the plate blank is heated to 1170-1200°C in step 2).

Preferably, the coiling temperature for the hot rolling is 550-600°C in step 3).

Preferably, the annealing temperature is 860-890°C in step 5).

Preferably, the annealing is carried out in a continuous mode and is controlled by means of irradiation heating in a reducing atmosphere, wherein the content of H in the furnace is 10-15% in step 5).

Preferably, the steel strip is slowly cooled to 700-730°C in step 5).

Preferably, the steel strip is rapidly cooled to 280-320°C in step 5).

Preferably, rapid cooling is followed by reheating to 390-420°C and holding for 180-250s in step 5).

Preferably, the holding time for annealing at 860-920°C is 80-120s in step 5).

Preferably, the cooling speed for rapid cooling to 240-320°C is 50-100°C/s in step 5).

Preferably, the speed for reheating to 360-460°C after rapid cooling is 5-10°C/s in step 5).

In the present invention, a high temperature heating furnace for hot rolling is used to hold temperature so as to facilitate full dissolution of C and N compounds, and coiling is performed at lower coiling temperature so as to obtain fine precipitate.

A conventional acid washing and cold rolling process is used. The annealing process is carried out in a continuous mode at relatively high temperature so that a homogenized austenite structure is formed and improvement of steel strength is favored. Then, the steel strip is slowly cooled to 690-750°C at a cooling speed of less than 10°C/s, so as to obtain a certain amount of ferrite which helps increasing steel plasticity. Then, the steel strip is rapidly cooled to a temperature between Mₛ and M_{f}, so that austenite is partially transformed into martensite which helps increase steel strength. Subsequently, the steel strip is reheated to 360-460°C and held for 100-300s, resulting in redistribution of carbon between martensite and austenite as well as formation of carbon rich austenite having high stability, so that there is obtained in the final structure a certain amount of residual austenite which is advantageous for the improvement of work hardening capacity and formability. The final structure of the steel plate is composed of ferrite + martensite + residual austenite. Owing to the high Si content used in the design, martensite that has already been formed in the steel substantially undergoes no decomposition in the course of partitioning, such that final acquisition of the desired structure form is guaranteed.

After the above treatment, the steel of the invention may obtain a yield strength of 600-900MPa, a tensile strength of 980-1150MPa, and an elongation of 17-25%.

Additionally, due to the decreased C content in martensite after partitioning, the anelasticity of martensite during cold deformation is reduced, and the resilience of the invention steel is thus improved remarkably.

Comparison between the present invention and the prior art:
The high-strength, continuously annealed, cold-rolled transformation-induced plasticity steel plate disclosed by Chinese Patent CN201010291498.3 may achieve an elongation of about 20% at a tensile strength level of 1000MPa, and has good comprehensive properties. However, a relatively large amount of alloy elements such as Cu, Ni, Cr and the like are added into the steel of this invention, which increases the material cost to a large extent, and notably restricts its application in the automobile field which has extremely critical demand on cost.

Japanese Patent JP 2005-232493 discloses a high-strength, high-formability cold-rolled steel plate that has simple composition and low cost, but the elongation on the order of 14% still can not satisfy the demand of automobile high-strength steel on formability.

American Patent US6210496 discloses a high-strength, high-formability cold-rolled steel that has relatively low tensile strength and thus can not meet the demand on the performance properties of automobile super-high-strength steel. Moreover, addition of a certain amount of Cr is required, rendering it unsuitable for use as automobile steel which has very critical demand on cost control.

Beneficial effects of the present invention:
By designing the composition suitably according to the present invention, super-high-strength cold-rolled steel plate is produced using continuous annealing under conventional hot rolling and cold rolling process conditions, without addition of any expensive alloy element. The strength can be significantly increased simply by a combination of suitably increased Mn content and the particular continuous annealing process, and the good plasticity is still preserved. Meanwhile, no special production equipments are needed, and the production cost is kept low.

After smelting, hot rolling, cold rolling, annealing and tempering rolling, the steel of the present invention has a good prospect of application in safety and structure parts for automobile, and is particularly suitable for manufacture of vehicle structure parts and safety parts that have complicated shapes and high demand on formability, such as side door bars, bumper bars, B pillars, etc..

### Description of Drawings

Fig. 1 shows a B pillar made from the steel of the present invention (thickness: 2.0mm).
Fig. 2 shows the comparison of resilience between the steel of the present invention and commercial duel-phase steel at 980MPa level (DP980) (thickness: 1.2mm for both).

### Detailed Description

The invention will be further illustrated with reference to the following examples.

Table 1 lists the chemical compositions of the examples of the steel according to the present invention. After smelting, hot rolling, cold rolling, annealing and tempering rolling, the products were obtained. The annealing process parameters as well as the mechanical properties of the products are shown in Table 2. As indicated by Table 2, a super-high-strength cold-rolled steel plate having a yield strength of 600-900MPa, a tensile strength of 980-1150MPa, and an elongation of 17-25% has been obtained according to the present invention by suitable process coordination.

**Table 1**

| Unit: wt% | | | | | | | | | | |
|---|---|---|---|---|---|---|---|---|---|---|
| | C | Si | Mn | Cr | Cu | Ni | P | S | Al | N |
| Ex. 1 | 0.22 | 1.8 | 2.1 | - | - | - | 0.005 | 0.004 | 0.042 | 0.0032 |
| Ex. 2* | 0.15 | 2.0 | 1.5 | - | - | - | 0.010 | 0.012 | 0.030 | 0.0051 |
| Ex. 3* | 0.20 | 1.3 | 3.0 | - | - | - | 0.008 | 0.005 | 0.050 | 0.0068 |
| Ex. 4* | 0.18 | 1.6 | 2.7 | - | - | - | 0.007 | 0.007 | 0.060 | 0.0046 |
| Ex. 5* | 0.25 | 1.0 | 2.3 | - | - | - | 0.012 | 0.006 | 0.050 | 0.0077 |
| Ex. 6 | 0.21 | 1.4 | 1.9 | - | - | - | 0.015 | 0.008 | 0.040 | 0.0039 |
| Comp. Ex. 1 | 0.35 | 0.52 | 1.50 | 0.3 | 0.5 | 0.3 | 0.05 | 0.001 | 0.035 | 0.0020 |
| Comp. Ex. 2 | 0.17 | 1.35 | 2.00 | - | - | - | 0.015 | 0.001 | 0.040 | 0.0025 |
| Comp. Ex. 3 | 0.21 | 1.05 | 2.02 | 0.33 | - | - | 0.041 | - | 0.051 | - |

| | | | | | | | | | | |
|---|---|---|---|---|---|---|---|---|---|---|
| *Comparative Example | | | | | | | | | | |

**Table 2**

| | Process number | Annealing process | | | | | | | | | Mechanical properties | | |
|---|---|---|---|---|---|---|---|---|---|---|---|---|---|
| | | Annealing temperature °C | Holding time s | Slow cooling speed °C /s | Initial temperature for rapid cooling °C | Rapid cooling speed °C/s | End temperature for rapid cooling °C | Reheating speed °C/s | Reheating temperature °C | Holding time for reheating S | YS (MPa) | TS (MPa) | TEL (%) |
| Ex. 1 | i | 880 | 80 | 4 | 700 | 60 | 320 | 5 | 460 | 180 | 680 | 996 | 21.8 |
| | ii | 880 | 100 | 4 | 720 | 60 | 300 | 5 | 460 | 220 | 700 | 998 | 18.3 |
| | iii | 880 | 110 | 6 | 720 | 80 | 300 | 5 | 390 | 260 | 750 | 1085 | 17.3 |
| Ex. 2* | i | 900 | 90 | 6 | 750 | 80 | 280 | 10 | 390 | 150 | 687 | 982 | 23.5 |
| | ii | 900 | 100 | 6 | 730 | 80 | 240 | 10 | 360 | 240 | 667 | 986 | 22.0 |
| | iii | 920 | 120 | 8 | 750 | 100 | 240 | 10 | 360 | 100 | 710 | 1016 | 18.1 |
| Ex. 3* | i | 860 | 120 | 8 | 710 | 50 | 290 | 8 | 430 | 280 | 822 | 1134 | 17.1 |
| | ii | 860 | 100 | 8 | 690 | 50 | 290 | 8 | 430 | 230 | 780 | 1105 | 19.0 |
| | iii | 860 | 90 | 10 | 690 | 70 | 300 | 8 | 460 | 250 | 715 | 1070 | 20.2 |
| Ex. 4* | i | 860 | 90 | 3 | 700 | 90 | 260 | 5 | 420 | 140 | 810 | 1098 | 20.1 |
| | ii | 880 | 90 | 3 | 700 | 90 | 250 | 7 | 420 | 280 | 697 | 1057 | 21.6 |
| | iii | 860 | 90 | 5 | 700 | 100 | 260 | 9 | 460 | 300 | 776 | 1106 | 20.9 |
| Ex. 5* | i | 890 | 80 | 5 | 730 | 60 | 270 | 6 | 400 | 190 | 756 | 1048 | 24.3 |
| | ii | 880 | 100 | 5 | 740 | 70 | 280 | 8 | 380 | 220 | 805 | 1101 | 22.1 |
| | iii | 890 | 120 | 7 | 730 | 80 | 310 | 10 | 410 | 210 | 877 | 1102 | 20.8 |
| Ex. 6 | i | 870 | 80 | 7 | 720 | 90 | 300 | 8 | 400 | 240 | 736 | 1029 | 20.3 |
| | ii | 900 | 90 | 7 | 720 | 70 | 280 | 8 | 390 | 200 | 775 | 1055 | 19.1 |
| | iii | 920 | 120 | 9 | 720 | 50 | 260 | 8 | 360 | 180 | 877 | 1102 | 17.8 |
| Comp. Ex. 1 | | 830 | - | - | - | - | 420 | - | 420 | 500 | 774 | 1011 | 21 |
| Comp. Ex. 2 | | 900 | - | - | 640 | - | 350 | - | - | - | 848 | 1010 | 14 |
| Comp. Ex. 3 | | 800 | - | - | 635 | - | 410 | - | 410 | 180 | 492 | 704 | 38 |

| | | | | | | | | | | | | | |
|---|---|---|---|---|---|---|---|---|---|---|---|---|---|
| *Comparative Example | | | | | | | | | | | | | |

The steel of the invention is particularly suitable for the manufacture of vehicle structure parts and safety parts that have complicated shapes and high demand on formability, such as side door bars, bumper bars, B pillars, etc..

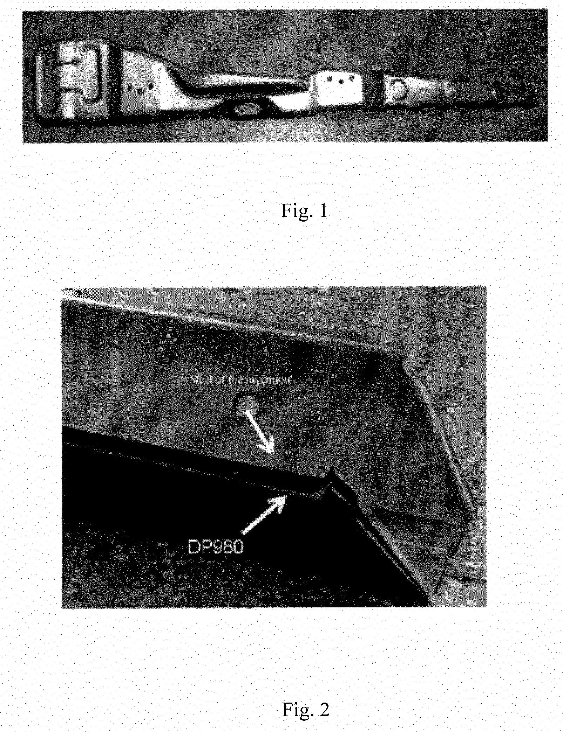

Turn to Figs. 1 and 2. Fig. 1 shows a B pillar made from the steel of the invention (thickness: 2.0mm). As indicated by Fig. 1, the steel of the invention exhibits excellent formability.

Fig. 2 shows the comparison of resilience between the steel of the invention and commercial duel-phase steel at 980MPa level (DP980) (thickness: 1.2mm for both). It demonstrates that the resilience of the steel of the invention is obviously lower than that of DP980 under the same forming process.

## Claims

1. A high-formability and super-high-strength steel plate, consisting of the following chemical components, based on weight percentages:
C: 0.18-0.22wt%
Si: 1.4-1.8wt%
Mn: 1.8-2.3wt%
P≤0.015wt%
S≤0.012wt%
Al: 0.03-0.06wt%
N≤0.008wt%
the balance of Fe and unavoidable impurities;
wherein the steel plate has a structure at room temperature of 10%-30% ferrite + 60-80% martensite + 5-15% residual austenite; a yield strength of 600-900MPa, a tensile strength of 980-1150MPa, and an elongation of 17-25%.

2. The high-formability and super-high-strength steel plate of claim 1, wherein in the composition of the steel plate, P≤0.012%, S≤0.008%, based on weight percentage.

3. A method for manufacturing the high-formability and super-high-strength steel plate of any one of claims 1-2, comprising the following steps:
1) smelting, casting
the above composition is smelted and cast into a plate blank;
2) the plate blank is heated to 1170-1230°C and held;
3) hot rolling
the end rolling temperature is 880±30°C, and the coiling temperature is 550-650°C;
4) acid washing, cold rolling
cold rolling reduction rate is 40-60%, and steel strip is formed;
5) continuous annealing
the steel strip is annealed at 860-920°C; slowly cooled to 690-750°C at a cooling speed of 3-10°C/s so that a certain proportion of ferrite is generated in the material; then rapidly cooled to 240-320°C at a cooling speed ≥50°C/s so that austenite is partially transformed into martensite; then reheated to 360-460°C, and held for 100-500s; finally cooled to room temperature; wherein in the end, a super-high-strength cold-rolled steel plate having a yield strength of 600-900MPa, a tensile strength of 980-1150MPa, an elongation of 17-25%, superior formability and low resilience is obtained.

4. The method of claim 3 for manufacturing the high-formability and super-high-strength steel plate, wherein the plate blank is heated to 1170-1200°C in step 2).

5. The method of claim 3 for manufacturing the high-formability and super-high-strength steel plate, wherein coiling temperature for the hot rolling is 550-600°C in step 3).

6. The method of claim 3 for manufacturing the high-formability and super-high-strength steel plate, wherein the annealing temperature is 860-890°C in step 5).

7. The method of claim 3 or 6 for manufacturing the high-formability and super-high-strength steel plate, wherein annealing is followed by slow cooling to 700-730°C in step 5).

8. The method of claim 3 for manufacturing the high-formability and super-high-strength steel plate, wherein the steel strip is rapidly cooled to 280-320°C in step 5).

9. The method of claim 3 or 8 for manufacturing the high-formability and super-high-strength steel plate, wherein rapid cooling is followed by reheating to 390-420°C and holding for 100-300s in step 5).

10. The method of claim 3 for manufacturing the high-formability and super-high-strength steel plate, wherein the holding time for annealing at 860-920°C is 80-120s.

11. The method of claim 3 for manufacturing the high-formability and super-high-strength steel plate, wherein the cooling speed for rapid cooling to 240-320°C is 50-100°C/s.

12. The method of claim 3 for manufacturing the high-formability and super-high-strength steel plate, wherein the speed for reheating to 360-460°C after rapid cooling is 5-10°C/s.

## Patentansprüche

1. Hochverformbares und hochfestes Stahlblech bestehend aus den folgenden chemischen Bestandteilen, bezogen auf Gewichtsprozente:
C: 0,18 - 0,22 Gew.-%
Si: 1,4 - 1,8 Gew.-%
Mn: 1,8 - 2,3 Gew.-%
P ≤ 0,015 Gew.%
S ≤ 0,012 Gew.-%
Al: 0,03 - 0,06 Gew.-%
N ≤ 0,008 Gew.-%
Rest Eisen und unvermeidbare Verunreinigungen;
wobei die Stahlplatte eine Struktur bei Raumtemperatur von 10 %-30 % Ferrit + 60-80 % Martensit + 5-15 % Restaustenit aufweist; eine Streckgrenze von 600-900 MPa, eine Zugfestigkeit von 980-1150 MPa und eine Dehnung von 17-25 %.

2. Hochverformbares und hochfestes Stahlblech nach Anspruch 1, wobei in der Zusammensetzung der Stahlplatte P ≤ 0,012 %, S ≤ 0,008 % bezogen auf Gewichtsprozente enthalten sind.

3. Verfahren zur Herstellung der hochverformbaren und hochfesten Stahlplatte nach einem der Ansprüche 1-2, umfassend die folgenden Schritte
1) Schmelzen, Gießen
die obige Zusammensetzung wird geschmolzen und zu einem Plattenrohling gegossen;
2) der Plattenrohling wird auf 1170-1230 °C erwärmt und gehalten;
3) Warmwalzen
die Endwalztemperatur beträgt 880 ± 30 °C und die Wickeltemperatur beträgt 550-650 °C;
4) Säurewäsche, Kaltwalzen
die Reduktionsrate des Kaltwalzens beträgt 40-60 % und ein Stahlband wird gebildet;
5) kontinuierliches Glühen
das Stahlwand wird bei 860-920 °C geglüht; langsam auf 690-750 °C mit einer Kühlgeschwindigkeit von 3-10 °C/Sekunde abgekühlt, so dass ein bestimmter Anteil Ferrit in dem Material erzeugt wird; anschließend schnell auf 240-320 °C mit einer Abkühlungsgeschwindigkeit ≥ 50 °C jede Sekunde abgekühlt, so dass Austenit teilweise in Martensit umgewandelt wird; anschließend wieder auf 360-460 °C erwärmt, und für 100-500 Sekunden gehalten; schließlich auf Raumtemperatur abgekühlt; wobei am Ende eine superhochfeste kaltgewalzte Stahlplatte mit einer Streckgrenze von 600-900 MPA, einer Zugfestigkeit von 980-1150 MPA, einer Dehnung von 17-45 %, überragender Formbarkeit und geringer Elastizität erhalten wird.

4. Verfahren nach Anspruch 3 zur Herstellung der hochverformbaren und hochfesten Stahlplatte, wobei die Stahlplatte in Schritt 2 auf 1170-1200 °C erwärmt wird.

5. Verfahren nach Anspruch 3 zur Herstellung der hochverformbaren und hochfesten Stahlplatte, wobei die Wickeltemperatur für das Warmwalzen in Schritt 3 550-600 °C beträgt.

6. Verfahren nach Anspruch 3 zur Herstellung der hochverformbaren und hochfesten Stahlplatte, wobei die Glühtemperatur in Schritt 5 860-890 °C beträgt.

7. Verfahren nach Anspruch 3 oder 6 zur Herstellung der hochverformbaren und hochfesten Stahlplatte, wobei auf das Glühen in Schritt 5 ein langsames Abkühlen auf 700-730 °C folgte.

8. Verfahren nach Anspruch 3 zur Herstellung der hochverformbaren und hochfesten Stahlplatte, wobei das Stahlband in Schritt 5 schnell auf 280-320 °C abgekühlt wird.

9. Verfahren nach Anspruch 3 oder 8 zur Herstellung der hochverformbaren und hochfesten Stahlplatte, wobei das schnelle Abkühlen in Schritt 5 von einem Wiedererwärmen auf 390-420 °C und Halten für 100-300 Sekunden gefolgt wird.

10. Verfahren nach Anspruch 3 zur Herstellung der hochverformbaren und hochfesten Stahlplatte, wobei die Haltedauer für das Glühen bei 860-920 °C 80-120 Sekunden beträgt.

11. Verfahren nach Anspruch 3 zur Herstellung der hochverformbaren und hochfesten Stahlplatte, wobei die Abkühlungsgeschwindigkeit für das schnelle Abkühlen auf 240-320 °C 50-100 °C je Sekunde beträgt.

12. Verfahren nach Anspruch 3 zur Herstellung der hochverformbaren und hochfesten Stahlplatte wobei die Geschwindigkeit der Wiedererwärmung auf 360-460 °C nach dem schnellen Abkühlen 5-10 °C je Sekunde beträgt.

## Revendications

1. Plaque d'acier super-résistante et présentant une aptitude élevée à la déformation, constituée des constituants chimiques suivants, sur une base de pourcentages en poids :
C : de 0,18 à 0,22 % en poids
Si : de 1,4 à 1,8 % en poids
Mn : de 1,8 à 2,3 % en poids
P ≤ 0,015 % en poids
S ≤ 0,012 % en poids
Al : de 0,03 à 0,06 % en poids
N ≤ 0,008 % en poids
le reste étant du Fe et des impuretés inévitables ;
où la plaque d'acier a une structure à température ambiante de 10 % à 30 % de ferrite + 60 à 80 % de martensite + 5 à 15 % d'austénite résiduelle ; une limite d'élasticité de 600 à 900 MPa, une résistance à la traction de 980 à 1150 MPa et un allongement de 17 à 25 %.

2. Plaque d'acier super-résistante et présentant une aptitude élevée à la déformation selon la revendication 1, où dans la composition de la plaque d'acier, P ≤ 0,012 %, S ≤ 0,008 %, sur une base de pourcentage en poids.

3. Procédé de fabrication de la plaque d'acier super-résistante et présentant une aptitude élevée à la déformation selon l'une quelconque des revendications 1 à 2, comprenant les étapes suivantes :
1) fusion, coulée
la composition ci-dessus est fondue et coulée en ébauche de plaque ;
2) l'ébauche de plaque est chauffée à une température de 1170 °C à 1230 °C et maintenue ;
3) laminage à chaud
la température de laminage de finissage est de 880 ± 30 °C, et la température d'enroulement va de 550 à 650 °C ;
4) lavage acide, laminage à froid
le taux de réduction du laminage à froid est de 40 à 60 %, et un feuillard d'acier est formé ;
5) recuit continu
le feuillard d'acier est recuit à une température de 860 à 920 °C ; refroidi lentement jusqu'à une température de 690 à 750 °C à une vitesse de refroidissement de 3 à 10 °C/s de façon à ce qu'une certaine proportion de ferrite soit générée dans le matériau ; puis refroidi rapidement jusqu'à une température de 240 à 320 °C à une vitesse de refroidissement supérieure ou égale à 50 °C/s de façon à ce que l'austénite soit partiellement transformée en martensite ; puis réchauffé jusqu'à une température de 360 à 460 °C et maintenu pendant 100 à 500 s ; pour finir refroidi jusqu'à la température ambiante ; où à la fin, une plaque d'acier laminée à froid super-résistante ayant une limite d'élasticité de 600 à 900 MPa, une résistance à la traction de 980 à 1150 MPa, un allongement de 17 à 25 %, une aptitude supérieure à la déformation et une faible résilience est obtenue.

4. Procédé selon la revendication 3 pour fabriquer la plaque d'acier super-résistante et présentant une aptitude élevée à la déformation, dans lequel l'ébauche de plaque est chauffée jusqu'à une température de 1170 à 1200 °C à l'étape 2).

5. Procédé selon la revendication 3 pour fabriquer la plaque d'acier super-résistante et présentant une aptitude élevée à la déformation, dans lequel la température d'enroulement pour le laminage à chaud va de 550 à 600 °C à l'étape 3).

6. Procédé selon la revendication 3 pour fabriquer la plaque d'acier super-résistante et présentant une aptitude élevée à la déformation, dans lequel la température de recuit va de 860 à 890 °C à l'étape 5).

7. Procédé selon la revendication 3 ou 6 pour fabriquer la plaque d'acier super-résistante et présentant une aptitude élevée à la déformation, dans lequel le recuit est suivi d'un refroidissement lent jusqu'à une température de 700 à 730 °C à l'étape 5).

8. Procédé selon la revendication 3 pour fabriquer la plaque d'acier super-résistante et présentant une aptitude élevée à la déformation, dans lequel le feuillard d'acier est refroidi rapidement jusqu'à une température de 280 à 320 °C à l'étape 5).

9. Procédé selon la revendication 3 ou 8 pour fabriquer la plaque d'acier super-résistante et présentant une aptitude élevée à la déformation, dans lequel le refroidissement rapide est suivi d'un réchauffage jusqu'à une température de 390 à 420 °C et d'un maintien pendant 100 à 300 s à l'étape 5).

10. Procédé selon la revendication 3 pour fabriquer la plaque d'acier super-résistante et présentant une aptitude élevée à la déformation, dans lequel la durée de maintien pour le recuit à une température de 860 à 920 °C est de 80 à 120 s.

11. Procédé selon la revendication 3 pour fabriquer la plaque d'acier super-résistante et présentant une aptitude élevée à la déformation, dans lequel la vitesse de refroidissement pour le refroidissement rapide jusqu'à une température de 240 à 320 °C est de 50 à 100 °C/s.

12. Procédé selon la revendication 3 pour fabriquer la plaque d'acier super-résistante et présentant une aptitude élevée à la déformation, dans lequel la vitesse de réchauffage jusqu'à une température de 360 à 460 °C après refroidissement rapide est de 5 à 10 °C/s.
